# EUROPÄISCHE PATENTANMELDUNG

(11) **EP 2 026 015 A1**
(43) Veröffentlichungstag der Anmeldung: **18.02.2009**
(21) Anmeldenummer: 08013891.0
(22) Anmeldetag: 02.08.2008
(51) Int. Cl.: F24D 3/18

(54) **Verfahren und Einrichtung zur Wärmeentnahme mit einer Wärmepumpe aus einer Trinkwasserleitung**

(30) Priorität: 09.08.2007 DE 102007037526
(71) Anmelder: Robert Bosch GmbH, 70442 Stuttgart (DE)
(72) Erfinder: Gäbler, Wolfgang, 03149 Forst (DE); Gebert, Heinz, 86732 Oettingen (DE)

(57) **Zusammenfassung**

Die Erfindung betrifft ein Verfahren und eine Einrichtung zur Wärmeentnahme aus einer Trinkwasserleitung (1), insbesondere aus dem öffentlichen Trinkwasserversorgungsnetz (2), mit einer Wasser/Wasser- oder Sole/Wasser-Wärmepumpe in einem zu beheizenden Gebäude, welches mit einer Hausanschlussleitung an das Trinkwasserversorgungsnetz (2) angebunden ist.

Der Erfindung liegt daher die Aufgabe zu Grunde, für die Verdampferstufe einer Wärmepumpe eine einfache und sichere Wärmequelle zur Verfügung zu stellen, bei der möglichst auch der Genehmigungsweg vereinfacht wird.

Gekennzeichnet ist die Erfindung dadurch, dass aus der Trinkwasserleitung (1, 2) ein Teilstrom des Trinkwassers entnommen wird, dass dieses im Kreislauf primärseitig über einen Wärmetauscher (4) geführt wird, welcher sekundärseitig mit der Wärmepumpe verbunden ist, dass dabei eine Wärmeentnahme erfolgt und dass das abgekühlte Trinkwasser wieder in die Trinkwasserleitung (1, 2) zurückgeführt wird.

## Beschreibung

Die Erfindung betrifft ein Verfahren und eine Einrichtung zur Wärmeentnahme mit einer Wärmepumpe aus einer Trinkwasserleitung nach dem Oberbegriff des Patentanspruches 1.

Nach dem Stand der Technik werden Wasser/Wasser-Wärmepumpen aus dem Grundwasser über Brunnen versorgt. Nach dem Wärmeentzug wird dabei das Wasser wieder über Schluckbrunnen in das Grundwasser zurückgeführt. Hierzu sind wasserrechtliche Genehmigungen erforderlich und der Bauaufwand ist relativ hoch.

Sole/Wasser-Wärmepumpen benötigen eine Erdwärmesondenanlage oder einen Flächenkollektor. Beides muss relativ aufwändig in das Erdreich eingebracht werden. Der Wärmeentzug erfolgt aus dem Erdreich und der Wärmetransport über ein mit Soleflüssigkeit gefülltes Rohrleitungssystem. Bei der Einbringung der Erdkollektoren besteht möglicherweise die Gefahr, dass die Grundwasserqualität gemindert wird, weil mit der Bohrung eine unsachgemäße Durchdringung unterschiedlicher Wasserhorizonte erfolgt. Hierzu werden ebenfalls wasserrechtliche Genehmigungen benötigt und in bestimmten Gebieten ist zum Schutz des Trinkwassers das Einbringen solcher Anlagen grundsätzlich untersagt.

Der Erfindung liegt daher die Aufgabe zu Grunde, für die Verdampferstufe einer Wärmepumpe eine einfache und sichere Wärmequelle zur Verfügung zu stellen, bei der möglichst auch der Genehmigungsweg vereinfacht wird.

Erfindungsgemäß wird dies mit den Merkmalen des Patentanspruches 1 gelöst. Vorteilhafte Weiterbildungen sind den Unteransprüchen zu entnehmen.

Das Verfahren zur Wärmeentnahme mit einer Wärmepumpe aus einer Trinkwasserleitung, insbesondere aus dem öffentlichen Trinkwasserversorgungsnetz, mit einer Wasser/Wasser- oder Sole/Wasser-Wärmepumpe in einem zu beheizenden Gebäude, welches mit einer Hausanschlussleitung an das Trinkwasserversorgungsnetz angebunden ist, ist dadurch gekennzeichnet, dass aus der Trinkwasserleitung ein Teilstrom des Trinkwassers entnommen wird, dass dieses im Kreislauf primärseitig über einen Wärmetauscher geführt wird, welcher sekundärseitig mit der Wärmepumpe verbunden ist, dass dabei eine Wärmeentnahme erfolgt und dass das abgekühlte Trinkwasser wieder in die Trinkwasserleitung zurückgeführt wird.

Die Trinkwasserentnahme erfolgt insbesondere über die Hausanschlussleitung und die Rückführung des abgekühlten Trinkwassers mittels einer Pumpe über eine Rückspeiseleitung, welche an das Trinkwasserversorgungsnetz angeschlossen ist.

Der aus der Trinkwasserleitung entnommene Teilstrom des Trinkwassers wird im Wärmetauscher um eine vorgebbare Temperaturdifferenz abgekühlt und dabei wird eine vorgebbare Minimaltemperatur in der Rückspeiseleitung eingehalten, welche insbesondere den Rahmen-Lieferbedingungen für Trinkwasser nach DIN 2000 entspricht. Ein von der Wärmeentnahmeleistung abhängiger Mindestdurchmesser der Trinkwasserleitung des Trinkwasserversorgungsnetzes muss dabei eingehalten werden.

Die Wasserentnahme erfolgt vorzugsweise etwa im oberen Drittel und die Rückspeisung etwa im unteren Drittel der Trinkwasserleitung, um einen thermischen Kurzschluss in der Versorgungsleitung zu verhindern. Dabei wird eine eine laminare Rückspeiseströmung begünstigende Strömungsgeschwindigkeit in der Trinkwasserleitung sichergestellt, indem eine Rohrdimensionsvergrößerung an der Rückspeiseleitung vor der Einmündung in die Trinkwasserleitung und/oder eine Einmündung der Rückspeiseleitung in die Trinkwasserleitung mit einem Winkel kleiner 30 Grad zur Horizontalen in Richtung der Hauptfließrichtung vorgesehen ist.

Der Abstand zwischen Entnahme und Einspeisung in der Versorgungsleitung sollte größer als 2 m sein. Ist der für den Wärmeentzug erforderliche Volumenstrom im Wärmetauscher zu jeder Zeit deutlich kleiner, zum Beispiel kleiner als die Hälfte der in der Trinkwasserleitung des öffentlichen Trinkwasserversorgungsnetzes auftretende Mindestvolumenstrom, so müssen keine besonderen Vorkehrungen zur Verhinderung eines thermischen Kurzschlusses getroffen werden. Besteht allerdings die Möglichkeit, dass der Volumenstrom in der Versorgungsleitung kleiner als das Doppelte des abgezweigten Entwärmungsvolumenstromes wird, müssen Entnahme und Rückspeisung eine Temperaturschichtung in der Versorgungsleitung ermöglichen.

Generell wird die entnommene Wärme über einen geschlossenen Betriebswasserkreislauf zur Speisung des Primärkreislaufs einer Wasser/Wasser- oder Sole/Wasser-Wärmepumpe verwendet und mit maximal 1,5 bar ist die Druckstufe im Primärkreislauf der Wärmepumpe kleiner als der minimale Versorgungsdruck im Trinkwasserversorgungsnetz.

Die Ansteuerung der Pumpe in der Rückspeiseleitung erfolgt bedarfsabhängig über die in der Wärmepumpe vorhandene Regeleinrichtung. Mit dem Variieren des geförderten Wasservolumenstromes kann ergänzend die vorgebbare Temperaturdifferenz zwischen Trinkwasserleitung und Rückspeiseleitung sowie die vorgebbare Minimaltemperatur in der Rückspeiseleitung eingehalten werden. Entsprechende Werte können dabei beispielsweise herstellerseitig vorgegeben und bei der Installation verändert und eingestellt werden.

Die Einrichtung zur Wärmeentnahme mit einer Wärmepumpe aus einer Trinkwasserleitung, insbesondere aus dem öffentlichen Trinkwasserversorgungsnetz, mit einer Wasser/Wasser- oder Sole/Wasser-Wärmepumpe in einem zu beheizenden Gebäude, welches mit einer Hausanschlussleitung an das Trinkwasserversorgungsnetz angebunden ist, ist im Wesentlichen gekennzeichnet durch einen Wärmetauscher, welcher sekundärseitig über zwei Anschlüsse mit der Wärmepumpe verbunden ist, und der primärseitig von einem aus der Trinkwasserleitung entnommenen Teilstrom des Trinkwassers durchströmt wird, mit einem Anschluss für die Trinkwasserleitung, mit einem Anschluss für eine Rückspeiseleitung, mit einer Pumpe und einer Messstelle in der Rückspeiseleitung.

Diese Messstelle in der Rückspeiseleitung kann ein Wärmemengenzähler, eine Messeinrichtung für den Wasservolumenstrom und/oder für die Wassertemperatur sein. Ergänzend kann eine Messeinrichtung für die Wassertemperatur auch in der Vorlaufleitung angeordnet sein.

Die Anlage besteht aus handelsüblichen Komponenten und ist als anschlussfertiges System vorgefertigt. So kann die Einrichtung durch den Betreiber des Trinkwasserversorgungsnetzes verplombt werden. Die dafür geeigneten Komponenten sind entsprechend gestaltet und/oder es ist ein entsprechendes Gehäuse vorgesehen. Vorteilhafterweise ist eine Kaltwasserverteilungsleitung eines Gebäudes nach der Einrichtung zur Wärmeentnahme aus einer Trinkwasserleitung über die Hausanschlussleitung abgezweigt, um die Rückspeisemenge in das Trinkwassernetz zu minimieren.

Mit der Erfindung steht für die Verdampferstufe einer Wärmepumpe eine einfache und sichere Wärmequelle zur Verfügung. Auch der Genehmigungsweg ist im Vergleich zu herkömmlichen Anlagen einfacher, denn für den Einsatz der Erfindung ist nur eine Erlaubnis des Wasserversorgers notwendig. Umfangreiche Plan- und Wasserrechtsgenehmigungen und die üblicherweise damit verbundenen Kosten für alle amtlichen Erlaubnisse entfallen.

Da erfindungsgemäß das Wasser vom Hausanschluss über den Wärmetauscher im Kreislauf wieder nach Entwärmung dem Trinkwasserversorgungsnetz zugeführt wird, werden auch die einschlägigen DIN-Vorschriften eingehalten. Die notwendige Sicherheit gegen Rückfluss in das öffentliche Trinkwasserversorgungsnetz bei möglichen Störfällen, ist durch vorschriftsgemäße Armaturen und durch die erfindungsgemäße Druckabstufung im Wärmetauscher sichergestellt, indem die Druckseite des Wärmetauschers Versorgungsdruckniveau hat und die Entnahmeseite mit einem Druck kleiner als 1,5 bar betrieben wird.

Um die Primärenergie aus dem Trinkwasser zu gewinnen, muss die Anlage mit geringen Temperaturdifferenzen betrieben werden. Die erfindungsgemäße Technik ermöglicht es, dass keine schädlichen Betriebstemperaturen im öffentlichen Trinkwasserversorgungsnetz auftreten, welche die Wasserqualität negativ beeinflussen. Zudem wird das im Gebäude zu verbrauchende kalte Trinkwasser zur Entwärmung mit herangezogen, so dass sich dadurch die Rückspeisemenge verringert.

Die Investitions- und Betriebkosten sind gegenüber den herkömmlichen Verfahren deutlich geringer und die erfindungsgemäße Ausgestaltung erschließt eine bisher nicht genutzte Wärmequelle. Mit der anschlussfertig vorgefertigten Einheit aus diversen Komponenten werden eine sichere Vorortmontage und dadurch weniger Montagefehler erreicht, die Einbauzeiten verkürzt und damit Kosten gespart. Der Ausstoß von Kohlendioxid wird vermindert und durch den Einsatz von Öko-Strom kann die Energiebilanz nach der gültigen Energieeinsparverordnung weiter verbessert werden. Sehr einfach ist die entzogene Wärmemenge über einen Wärmemengenzähler messbar. Die Wärmepumpe kann als Wasser/Wasser- oder Sole/Wasser- Wärmepumpe betrieben und wahlweise in ein mono-, bi-oder multivalentes Heizungssystem eingebunden werden.

Neben der Verwendung zu Heizzwecken kann eine Wärmepumpe im Zusammenhang mit dem erfindungsgemäßen Verfahren und der erfindungsgemäßen Einrichtung auch zur Kühlung eingesetzt werden. Dabei schaltet die Wärmepumpe auf Kühlbetrieb um und es ist eine umgekehrte sekundärseitige Anströmung des Wärmetauschers vorgesehen. Wärme wird dann vom sekundärseitigen, über die Wärmepumpe führenden Kreislauf an den primärseitigen Kreislauf mit dem Teilstrom des Trinkwassers übertragen. Das erwärmte Trinkwasser wird wieder in die Trinkwasserleitung zurückgeführt. Dabei wird dann von der Regeleinrichtung eine zweite, weitere vorgebbare Temperaturdifferenz zwischen Trinkwasserleitung und Rückspeiseleitung sowie die vorgebbare Maximaltemperatur in der Rückspeiseleitung eingehalten.

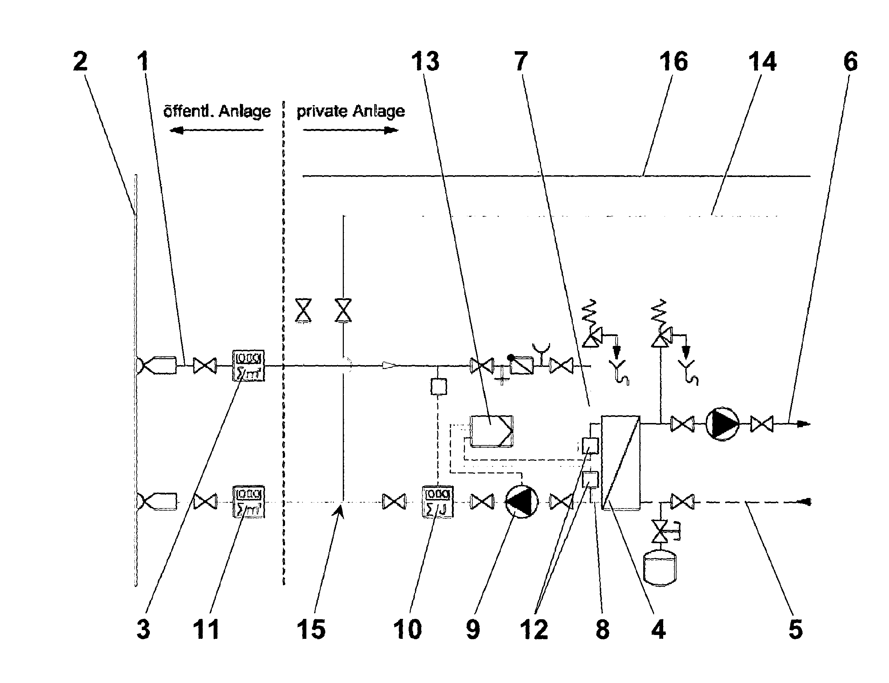

Die Zeichnung stellt ein Ausführungsbeispiel der Erfindung dar und zeigt schematisch den Aufbau einer Einrichtung zur Wärmeentnahme aus einer Trinkwasserleitung, insbesondere aus dem öffentlichen Trinkwasserversorgungsnetz.

Die Einrichtung wird einer nicht dargestellten Wasser/Wasser- oder Sole/Wasser-Wärmepumpe in einem zu beheizenden Gebäude vorgeschaltet, welches mit einer Trinkwasserleitung 1 an das Trinkwasserversorgungsnetz 2 angebunden ist. In der Trinkwasserleitung 1 befindet sich der bekannte Wasserzähler 3 des Wasserversorgers.

Im Wesentlichen besteht die Einrichtung aus einem Wärmetauscher 4, welcher sekundärseitig über einen Kreislauf mit den beiden Anschlüssen 5 und 6 mit der Wärmepumpe verbunden ist, und der primärseitig mindestens von einem aus der Trinkwasserleitung 1 oder dem Trinkwasserversorgungsnetz 2 entnommenen Teilstrom des Trinkwassers durchströmt wird, mit einem Anschluss 7 für die Trinkwasserleitung 1, mit einem Anschluss für eine Rückspeiseleitung 8, mit einer Pumpe 9 und mindestens einer Messstelle mit einem Wärmemengenzähler 10 in der Rückspeiseleitung 8. In dieser sind ein weiterer Wasserzähler 11 des Wasserversorgers sowie vor dem Wärmetauscher, auch in der Vorlaufleitung zum Anschluss 7, Temperaturfühler 12 für die Wassertemperatur angebracht. Die gemessene Wassertemperatur wird von einer Regeleinrichtung 13 erfasst und ausgewertet, um die Pumpe 9 entsprechend anzusteuern.

Die in der Zeichnung als privater Anlagenteil bezeichneten Komponenten werden als anschlussfertiges System vorgefertigt. Weiterhin ist in der Zeichnung dargestellt, dass die Kaltwasserverteilungsleitung 14 als erster Zweig des mit der Wärmepumpe zu beheizenden Gebäudes am Knotenpunkt 15, also nach der Einrichtung zur Wärmeentnahme, aus der Rückspeiseleitung 8 abzweigt. Es reduziert sich dadurch der Rückspeisevolumenstrom ins Trinkwasserversorgungsnetz 2, weil dem über die Trinkwasserleitung 1 ins Gebäude nachströmenden Wasser schon Wärme entzogen wird. Ebenfalls dargestellt ist die bekannte Hausanschlussleitung 16 als zweiter Zweig, welche beispielsweise auf direktem Wege zu einem Warmwasserbereiter im Objekt führt.

## Patentansprüche

1. Verfahren zur Wärmeentnahme aus einer Trinkwasserleitung, insbesondere aus dem öffentlichen Trinkwasserversorgungsnetz, mit einer Wasser/Wasser- oder Sole/Wasser-Wärmepumpe in einem zu beheizenden Gebäude, welches mit einer Hausanschlussleitung an das Trinkwasserversorgungsnetz angebunden ist,
**dadurch gekennzeichnet, dass** aus der Trinkwasserleitung (1, 2) ein Teilstrom des Trinkwassers entnommen wird, dass dieses im Kreislauf primärseitig über einen Wärmetauscher (4) geführt wird, welcher sekundärseitig mit der Wärmepumpe verbunden ist, dass dabei eine Wärmeentnahme erfolgt und dass das abgekühlte Trinkwasser wieder in die Trinkwasserleitung (1, 2) zurückgeführt wird.

2. Verfahren nach Anspruch 1,
**dadurch gekennzeichnet, dass** die Trinkwasserentnahme insbesondere über die Hausanschlussleitung und die Rückführung des abgekühlten Trinkwassers mittels einer Pumpe (9) über eine Rückspeiseleitung (8), welche an das Trinkwasserversorgungsnetz (2) angeschlossen ist, erfolgt.

3. Verfahren nach den Ansprüchen 1 oder 2,
**dadurch gekennzeichnet, dass** der aus der Trinkwasserleitung (1, 2) entnommene Teilstrom des Trinkwassers im Wärmetauscher (4) um eine vorgebbare Temperaturdifferenz abgekühlt wird und dass dabei eine vorgebbare Minimaltemperatur in der Rückspeiseleitung (8) eingehalten wird, welche insbesondere den Rahmen-Lieferbedingungen für Trinkwasser nach DIN 2000 entspricht.

4. Verfahren nach einem der Ansprüche 1 oder 3,
**dadurch gekennzeichnet, dass** ein von der Wärmeentnahmeleistung abhängiger Mindestdurchmesser der Trinkwasserleitung des Trinkwasserversorgungsnetzes (2) einzuhalten ist.

5. Verfahren nach einem der Ansprüche 1 bis 4,
**dadurch gekennzeichnet, dass** die Wasserentnahme etwa im oberen Drittel und die Rückspeisung etwa im unteren Drittel der Trinkwasserleitung des Trinkwasserversorgungsnetzes (2) erfolgt, wobei eine eine laminare Rückspeiseströmung begünstigende Strömungsgeschwindigkeit in der Trinkwasserleitung des Trinkwasserversorgungsnetzes (2) sichergestellt wird, indem eine Rohrdimensionsvergrößerung an der Rückspeiseleitung (8) vor der Einmündung in die Trinkwasserleitung des Trinkwasserversorgungsnetzes (2) und/oder eine Einmündung der Rückspeiseleitung (8) in die Trinkwasserleitung des Trinkwasserversorgungsnetzes (2) mit einem Winkel kleiner 30 Grad zur Horizontalen in Richtung der Hauptfließrichtung vorgesehen ist.

6. Verfahren nach einem der Ansprüche 1 bis 5,
**dadurch gekennzeichnet, dass** die entnommene Wärme über einen geschlossenen Betriebswasserkreislauf zur Speisung des Primärkreislaufs einer Wasser/Wasser- oder Sole/Wasser-Wärmepumpe verwandt wird.

7. Verfahren nach einem der Ansprüche 1 bis 6,
**dadurch gekennzeichnet, dass** die Druckstufe im Primärkreislauf der Wärmepumpe mit maximal 1,5 bar kleiner ist als der minimale Versorgungsdruck im Trinkwasserversorgungsnetz (2).

8. Verfahren nach einem der Ansprüche 1 bis 7,
**dadurch gekennzeichnet, dass** die Ansteuerung der Pumpe (9) in der Rückspeiseleitung (8) bedarfsabhängig über eine Regeleinrichtung (13) der Wärmepumpe erfolgt, und dass mit dem Variieren des geförderten Wasservolumenstromes ergänzend die vorgebbare Temperaturdifferenz zwischen Trinkwasserleitung (1) und Rückspeiseleitung (8) sowie die vorgebbare Minimaltemperatur in der Rückspeiseleitung (8) eingehalten wird.

9. Verfahren nach einem der Ansprüche 1 bis 8,
**dadurch gekennzeichnet, dass** bei einer Umschaltung der Wärmepumpe auf Kühlbetrieb, und einer umgekehrten sekundärseitigen Anströmung des Wärmetauschers (4), Wärme vom sekundärseitigen, über die Wärmepumpe führenden Kreislauf an den primärseitigen Kreislauf mit einem Teilstrom des Trinkwassers übertragen wird, und dass das erwärmte Trinkwasser wieder in die Trinkwasserleitung (1, 2) zurückgeführt wird, wobei eine zweite vorgebbare Temperaturdifferenz zwischen Trinkwasserleitung (1) und Rückspeiseleitung (8) sowie die vorgebbare Maximaltemperatur in der Rückspeiseleitung (8) eingehalten wird.

10. Einrichtung zur Durchführung des Verfahrens nach den Ansprüchen 1 bis 9 zur Wärmeentnahme aus einer Trinkwasserleitung (1), insbesondere aus dem öffentlichen Trinkwasserversorgungsnetz (2), mit einer Wasser/Wasser- oder Sole/Wasser-Wärmepumpe in einem zu beheizenden Gebäude, welches mit einer Hausanschlussleitung an das Trinkwasserversorgungsnetz (2) angebunden ist,
**gekennzeichnet durch** einen Wärmetauscher (4), welcher sekundärseitig über zwei Anschlüsse (5, 6) mit der Wärmepumpe verbunden ist, und der primärseitig von einem aus der Trinkwasserleitung (1, 2) entnommenen Teilstrom des Trinkwassers durchströmt wird, mit einem Anschluss (7) für die Trinkwasserleitung (1), mit einem Anschluss für eine Rückspeiseleitung (8), mit einer Pumpe (9) und einer Messstelle in der Rückspeiseleitung (8).

11. Einrichtung nach Anspruch 10,
**dadurch gekennzeichnet, dass** die Messstelle in der Rückspeiseleitung (8) ein Wärmemengenzähler (10), eine Messeinrichtung für den Wasservolumenstrom und/oder für die Wassertemperatur ist, und dass ergänzend eine Messeinrichtung für die Wassertemperatur auch in der Vorlaufleitung angeordnet ist.

12. Einrichtung nach den Ansprüchen 10 oder 11,
**dadurch gekennzeichnet, dass** diese als anschlussfertiges System mit den Wesentlichen Komponenten vorgefertigt ist.

13. Einrichtung nach einem der Ansprüche 10 bis 12,
**dadurch gekennzeichnet, dass** diese durch den Betreiber des Trinkwasserversorgungsnetzes (2) zu verplomben ist und dafür geeignete Komponenten und/oder ein entsprechendes Gehäuse aufweist.

14. Einrichtung nach einem der Ansprüche 10 bis 13,
**dadurch gekennzeichnet, dass** eine Kaltwasserverteilungsleitung (14) eines Gebäudes nach der Einrichtung zur Wärmeentnahme aus einer Trinkwasserleitung (1) über die Hausanschlussleitung abgezweigt ist.
